# EUROPEAN PATENT SPECIFICATION

(11) **EP 1 230 994 B1**
(45) Date of publication and mention of the grant of the patent: **23.03.2005**
(21) Application number: 02001490.8
(22) Date of filing: 22.01.2002
(51) Int. Cl.: B21C 23/08, B21C 25/08

(54) **Process for extruding tube having different sections and die for tube extrusion molding**
Verfahren zum Extrudieren eines Rohres mit unterschiedlichen Abschnitten und Extrusionsdüse
Méthode d'extrusion d'un tube comprenant différentes sections et filière d'extrusion

(30) Priority: 31.01.2001 JP 2001024920
(43) Date of publication of application: 14.08.2002
(73) Proprietor: HONDA GIKEN KOGYO KABUSHIKI KAISHA, Minato-ku Tokyo (JP)
(72) Inventor: Yanagibashi,Yoshitaka, c/oK.K.Honda Gijutsu Kenky., Wako-shi, Saitama (JP); Hoshi, Konomu, c/oK.K.Honda Gijutsu Kenkyusho, Wako-shi, Saitama (JP)
(74) Representative: Liska, Horst, Dr.-Ing.

(56) References cited:
- EP-A- 0 528 215
- EP-A- 0 747 145
- EP-A- 0 769 334
- PATENT ABSTRACTS OF JAPAN vol. 1999, no. 01, 29 January 1999 (1999-01-29) & JP 10 286619 A (MITSUBISHI ALUM CO LTD), 27 October 1998 (1998-10-27) -& JP 10 286619 A (MITSUBISHI ALUM CO LTD) 27 October 1998 (1998-10-27)

## Description

The present invention relates to a process for extruding a tube having different sections in its longitudinal direction and a die for tube extrusion molding used when the tube is extruded and the tube is used for a vehicle for example, particularly for the body frame of a motorcycle.

Heretofore, a process for extruding a tube used for a member forming the body of a vehicle such as a motorcycle and having variable sections in its longitudinal direction and a die for extrusion used for extrusion molding respectively disclosed in Japanese published unexamined patent application No. Hei 10-286619 (see Fig. 11), which forms the basis for the preamble of claims 1 and 3, are known. This die for extrusion is provided with a fixed female die having a fixed die hole and a slide die which has a slide die hole in the same shape as the fixed die hole and which can be slid on the lower surface of the fixed female die. Two or three fixed cores are arranged in parallel in the fixed die hole via clearance and two or three slide cores integrated with the slide die are also arranged in parallel in the slide die hole via clearance. The slide core is laminated on the fixed core and can be slid for the fixed core. A tubelike member (hereinafter merely called a tube) in the shape of a letter E or in the shape of the letter E having one more bar in the center of the inside of which a rib for reinforcement is formed and the sectional form of which changes in the longitudinal direction is formed by moving the slide die in a direction perpendicular to the direction of extrusion, extruding the material from a communicating part between the slide core and the fixed core and between the fixed die hole and the slide die hole by the die for extrusion.

As the rib for reinforcement is extended in a direction in which the width of the above-mentioned conventional type tube changes in case a tube the width of which changes in the longitudinal direction is used for a part requiring high rigidity against a load that acts from a direction in which the width of the tube changes such as a main pipe of a motorcycle, the enhancement of the rigidity by the rib is not enough.

In case a tube is connected to another member and a large load acts on a connection of the tube, it is desired in view of lightening that not the rigidity is enhanced by reinforcing the whole tube but only the vicinity of the connection of the tube is reinforced to have high rigidity. However, in the above-mentioned conventional type tube, as the rib for reinforcement is formed overall in the longitudinal direction of the tube, the rib is also formed in a part not requiring the enhancement of the rigidity, the weight of a product using the tube, for example a vehicle is increased, in addition, the amount of the material used for the tube becomes more than the required amount and the cost of the material is increased and as a result, there is a problem that the cost of the product using the tube is increased.

It can be also thought that a reinforcing member is welded to enhance the rigidity of a part of a tube, however, in that case, there is a problem that the increase of manufacturing manhours and the increase of the cost by welding are caused.

Also, it is desirable in the main pipe that the rigidity of a connection to the head pipe is enhanced and in the other part, ride quality evaluation is enhanced utilizing spring caused by reducing the rigidity to some extent. However, it is difficult to extrude a tube meeting such a requirement using the conventional type die for extrusion.

The invention is made in view of such a situation, the common object of the invention according to Claims 1 and 2 is to provide an extrusion molding process wherein a tube having an intermediate wall extended in a direction crossing a direction in which the width of the tube changes can be formed easily and in addition, at a low cost, and further, the object of the invention according to Claim 2 is to provide an extrusion molding process wherein a tube the rigidity of only a required part of which is enhanced by an intermediate wall can be easily formed. The object of the invention according to Claims 3 and 4 is to provide a die for tube extrusion molding suitable for embodying the invention according to Claims 1 and 2.

The invention according to Claim 1 is based upon a process for extruding a tube having different sections wherein a tube is formed by extruding the material via an opening formed by the superposition in the direction of extrusion of a first die hole formed in the first die and a second die hole formed in the second die using a die for tube extrusion molding provided with the first die and the second die which are superposed in the direction of extrusion and which can be relatively moved in a set direction along the superposed surface and the sectional form of the tube is varied in the direction of extrusion by relatively moving the first die and the second die in the set direction and a tube is extruded having different sections wherein the opening has an opening for a tube wall and an opening for at least one intermediate wall which continues to the opening for the tube wall inside the opening for the tube wall, characterized in that the opening for at least one intermediate wall has predetermined width in a first direction which is a direction when the set direction is projected on a plane perpendicular to the direction of extrusion and which is extended in a second direction crossing the first direction on the perpendicular plane and in that the first die and the second die are relatively moved in the set direction, extruding the material from the opening, the wall of the tube the width in the first direction of which varies in the longitudinal direction is formed via the opening for the tube wall and simultaneously, the intermediate wall having the fixed thickness of the predetermined width in the first direction, extended in the longitudinal direction and continuing to the tube wall is formed in the inside space of the tube via the opening for the intermediate wall.

According to the invention according to Claim 1, as one or more intermediate walls extended in the second direction crossing the first direction can be easily formed by the opening for the intermediate wall in the inside space of the tube in which the width of the wall formed by the opening for the tube wall varies in the first direction by relatively moving the first and second dies in the set direction, extruding the material from the opening, the productivity of the tube the rigidity of which is enhanced by having one or more intermediate walls formed in the direction crossing the direction in which the width of the tube varies is enhanced and the cost can be reduced. In addition, as the intermediate wall can also have fixed thickness corresponding to predetermined width in the longitudinal direction in case the width of the tube varies, the increase of the weight of the tube by forming the intermediate wall can be inhibited.

The invention according to Claim 2 is based upon the process for extruding the tube having different sections according to Claim 1 and is characterized in that the intermediate wall is a connecting wall connecting two tube wall parts opposite in the second direction of the tube wall and partitioning the inside space into plural independent partial spaces on the section of the tube and the number of the connecting walls in the longitudinal direction of the tube is changed by opening or blocking at least one of the openings for the intermediate walls according to the amount of the relative movement in the set direction of the first and second dies.

According to the invention according to Claim 2, as the tube having high rigidity is acquired by forming the connecting wall connecting two tube wall parts opposite in the second direction crossing the first direction in which the width of the tube wall is changed and the tube composed of the combination of a part having one or more connecting walls and a part having no connecting wall respectively in the longitudinal direction can be easily formed by controlling the amount of the relative movement of the first and second dies, the productivity of the tube formed by a part having the connecting walls of different numbers according to the magnitude of required rigidity is enhanced, the cost can be reduced and in addition, as the connecting wall is formed in only a part requiring the high rigidity of the tube, the increase of the weight can be inhibited, compared with a tube in which a connecting wall is formed overall in the longitudinal direction of the tube.

The invention according to Claim 3 is based upon a die for tube extrusion molding provided with a first die and a second die which are superposed in a direction of extrusion and which can be relatively moved in a set direction along the superposed surface where the first die has a first die hole and the second die has a second die hole and an opening formed by the superposition in the direction of extrusion of the first die hole and the second die hole forms the outflow passage of the material of the formed tube, and is characterized in that the first die hole is formed by a void between the first peripheral wall of a first hole formed in the first die and a first core arranged in the first hole and integrated with the first die, the second die hole is formed by a void between the second peripheral wall of a second hole formed in the second die and a second core arranged in the second hole and integrated with the second die the first core is composed of plural child cores arranged in parallel, having predetermined width in a first direction which is a direction when the set direction is projected on a plane perpendicular to the direction of extrusion and forming a void between at least one first cores extended in a second direction crossing the first direction on the perpendicular plane, the opening has an opening for a tube wall formed by a void between the first peripheral wall or the second peripheral wall and the first core or the second core and an opening for a first intermediate wall defined by the void between the first cores and continuing to the opening for the tube wall and the first die and the second die are superposed so that the maximum interval in the first direction of the opening for the tube wall can be varied according to the amount of the relative movement in the set direction of the first die and the second die and the second core keeps at least one of the openings for the first intermediate wall in an open state by the predetermined width and in a blocked state.

According to the invention according to Claim 3, the width in the first direction of the wall of the tube can be changed by the opening having the opening for the tube wall formed by the first and second die holes of the first and second dies superposed so that they can be relatively moved in the set direction and the openings for one or more first intermediate walls opened or blocked by the second core and the tube having high rigidity having one or more intermediate walls extended in the second direction in the inside space of the tube via the opening for the first intermediate wall and extended with fixed thickness corresponding to the predetermined width of a void between the first cores in the longitudinal direction can be formed. Further, the tube composed of the combination of a part having one or more intermediate walls in the longitudinal direction and a part no intermediate wall can be easily formed by controlling the amount of the relative movement of the first and second dies.

The invention according to Claim 4 is based upon the die for tube extrusion molding according to Claim 3 and is characterized in that the void between the first cores is continuously extended in a second direction, the second core is composed of plural child cores arranged in parallel respectively having predetermined width in the first direction and forming a void between at least one second cores continuously extended in the second direction, the opening has an opening for a second intermediate wall defined by a void between the second cores and continuing to the opening for the tube wall and the first die and the second die are superposed so that the first core keeps at least one of the openings for the second intermediate wall in an open state by the predetermined width and in a blocked state according to the amount of the relative movement in the set direction of the first die and the second die.

According to the invention according to Claim 4, as the opening has the openings for one or more first intermediate walls opened or blocked by the second core, continuously extended in the second direction and continuing to the opening for the tube wall and the openings for one or more second intermediate walls opened or blocked by the first core, continuously extended in the second direction and continuing to the opening for the tube wall, the tube having high rigidity provided with connecting walls which are two or more intermediate walls extended in the second direction in the inside space of the tube, extended in the longitudinal direction with fixed thickness corresponding to the predetermined width of a void between the second cores, connecting the tube wall in the second direction can be formed. Further, the tube composed of the combination of a part having two or more connecting walls in the longitudinal direction, a part having one connecting wall and a part having no connecting wall can be easily formed by controlling the amount of the relative movement of the first and second dies according to the magnitude of the rigidity required every part in the longitudinal direction of the tube.

In this specification, superposition means being superposed. "The section" of the tube means the cross section of a plane perpendicular to the direction of extrusion or the longitudinal direction of the tube.

Referring to Figs. 1 to 15, embodiments of the invention will be described below.
Fig. 1 shows a first embodiment of the invention and is a schematic left side view showing a motorcycle provided with a main pipe formed by a tube extruded using a die for tube extrusion molding according to the invention;
Fig. 2 is a perspective view showing the tube forming the main pipe shown in Fig. 1;
Fig. 3 is a sectional view showing the main part of an extruder for forming the tube shown in Fig. 2;
Fig. 4 is an enlarged sectional view showing the main part of the die for tube extrusion molding of the extruder shown in Fig. 3;
Fig. 5 is a sectional view viewed along a line V-V shown in Fig. 4;
Fig. 6 is a sectional view viewed along a line VI-VI shown in Fig. 4;
Fig. 7 is a sectional view viewed along a line VII-VII shown in Fig. 4;
Fig. 8 is a sectional view viewed along a line VIII-VIII shown in Fig. 4;
Fig. 9A is a plan for explaining the positional relation of a fixed die hole and a fixed core in a fixed die and Fig. 9B is a plan for explaining the positional relation of a variable die hole and a variable core in a variable die;
Figs. 10 are plans for explaining the positional relation of the fixed die and the variable die when the fixed die and the variable die are superposed and the variable die is moved;
Figs. 11 show a second embodiment of the invention and correspond to Figs. 9 in the first embodiment;
Figs. 12 show the second embodiment and correspond to Figs. 10 in the first embodiment;
Fig. 13 is a perspective view showing a tube formed according to the second embodiment;
Figs. 14 show a third embodiment of the invention and correspond to Figs. 9 in the first embodiment; and
Fig. 15 is a perspective view showing a tube formed according to the third embodiment.

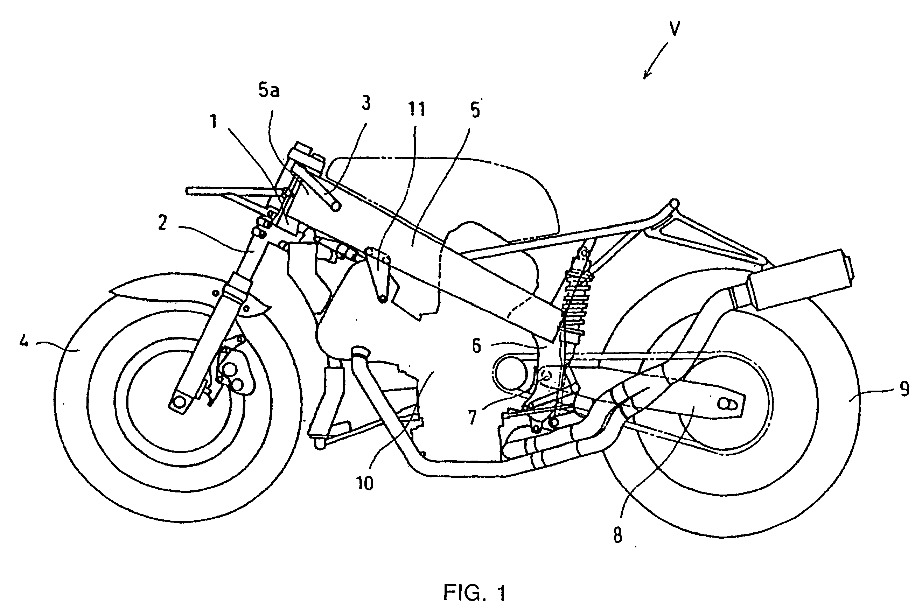

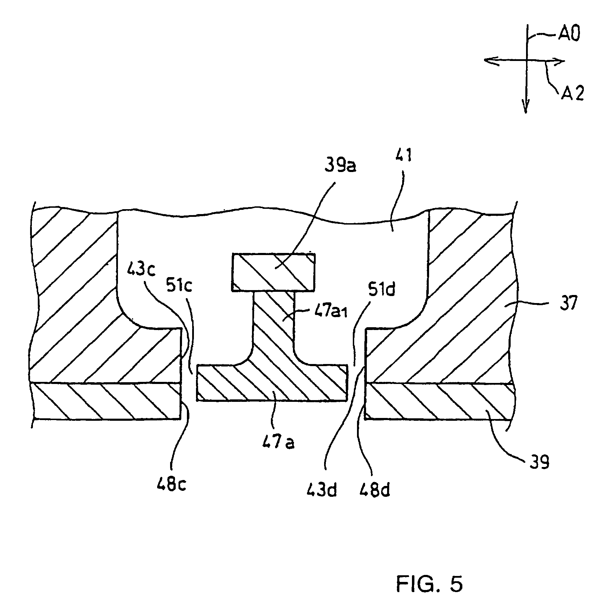

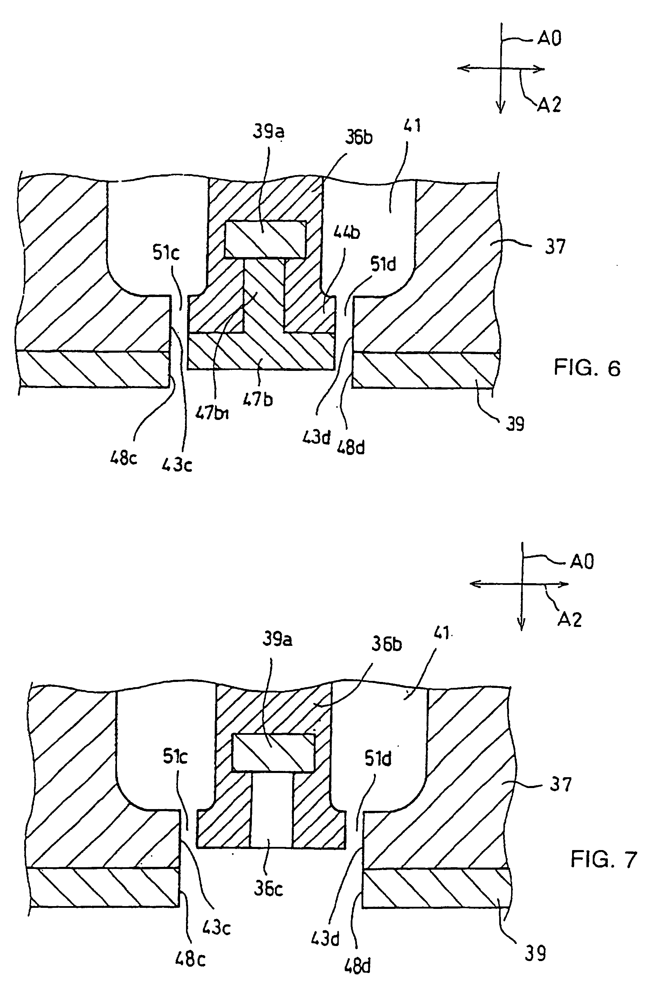

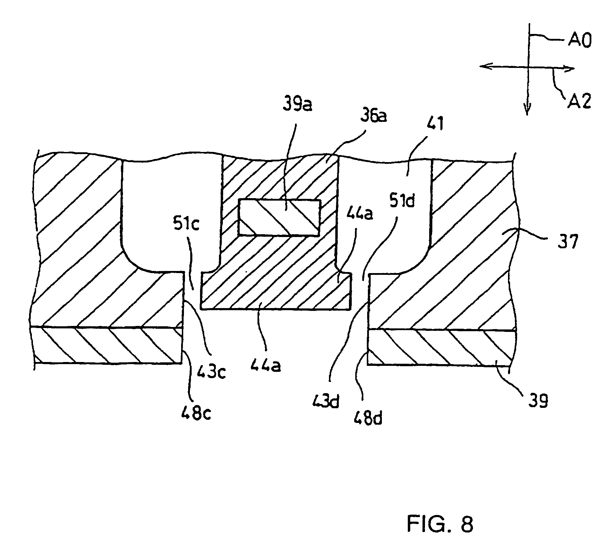

Figs. 1 to 10 show a first embodiment of the invention and Fig. 1 is a schematic left side view showing a motorcycle V in which a tube formed in an extrusion molding process using a die for tube extrusion molding according to the invention is used for a main pipe. In the motorcycle V, a handlebar 3 is provided at the upper end of a front fork 2 supported by a head pipe 1 so that the front fork can be turned and a front wheel 4 is supported at the lower end of the front fork by a shaft. A pair of right and left main pipes 5 each front end of which is connected to the head pipe 1 are extended diagonally downward in the rear of a vehicle body, being spread symmetrically right and left and the vicinities of the back ends of the main pipes are coupled by a cross pipe (not shown) . A pair of right and left pivot plates 6 are respectively connected to the back ends of both main pipes 5 and a rear fork 8 supporting a rear wheel 9 via a shaft is supported by a pivot 7 supported by both pivot plates 6 so that the rear fork can fluctuate. The front of an internal combustion engine 10 is supported via a pair of right and left engine hangers 11 and the rear is supported by both main pipes 5 via both pivot plates 6.

In the first embodiment, "the upper and lower sides, the front and the rear and the right and the left" respectively mean the upper and lower sides, the front and the rear and the right and the left of a vehicle.

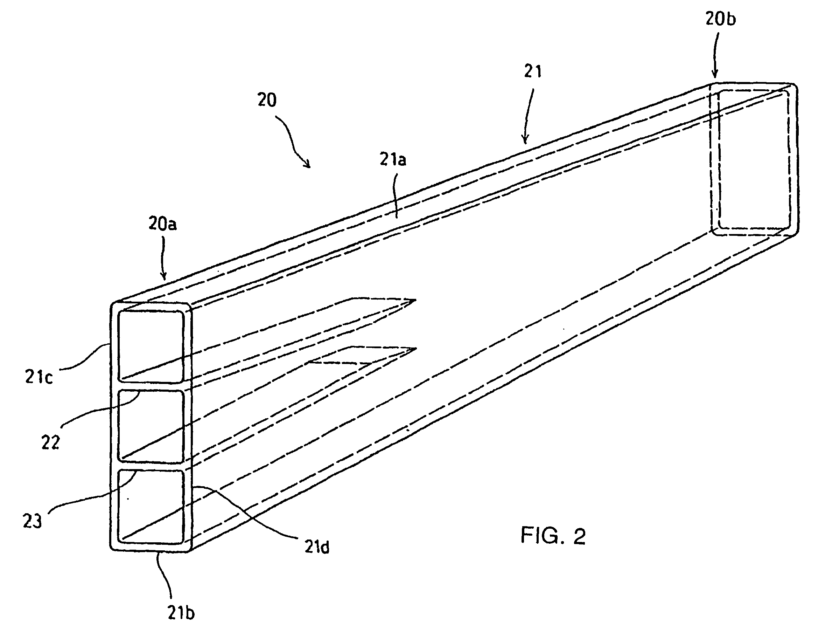

Each main pipe 5 is acquired by working a tube 20 made of aluminum or an aluminum alloy, shown in Fig. 2 and formed by extrusion molding such as bending. The tube 20 the sectional form of which changes in a longitudinal direction (in the direction of extrusion in forming) has a tube wall 21 composed of a first tube wall part 21a, a second tube wall part 21b, a third tube wall part 21c and a fourth tube wall part 21d and the tube wall 21 has a substantially rectangular closed section having predetermined thickness and vertically longer. As a vertical load acts on each main pipe 5 from the front fork 2, the pivot 7 and others, the above-mentioned load, the bending moment based upon the load and the return moment act on the front of each main pipe 5 having a connection 5a with the head pipe 1 and therefore, the front of the main pipe 5 including the connection 5a requires high rigidity. Therefore, in the inside space of the tube 20, two connecting walls 22 and 23 connecting the third tube wall part 21c and the fourth tube wall part 21d are vertically formed as a reinforcing wall between the first tube wall part 21a and the second tube wall part 21b. Therefore, the sectional form of the tube 20 in a part having both connecting walls 22 and 23 is in the shape of a letter E having one more bar and in the section, the inside space is partitioned into independent three partial spaces. No connecting walls 22 and 23 are formed in the rear forming the rear of each main pipe 5 of the tube 20 and there, the single inside space is formed by the tube wall 21 of the tube 20.

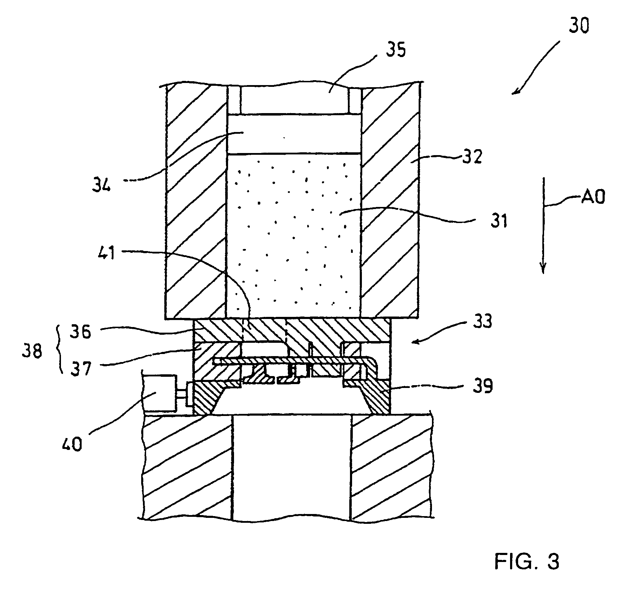

Next, referring to Fig. 3, an extruder 30 for extruding the tube 20 will be described. The extruder 30 is provided with a container 32 for housing aluminum or an aluminum alloy which is the material 31 (the billet) of the tube 20, a die for tube extrusion molding 33, a dummy block 34 for extruding the material 31 from the container 32 and a stem 35 that transmits force caused by a ram to the dummy block 34. The die for tube extrusion molding 33 is provided with a fixed male die 36 fixed to the container 32, a fixed female die 37 superposed on the fixed male die 36 and fixed to the fixed male die and a variable die 39 which is superposed on the fixed female die 37 and which can be slid along the superposed surface, and these dies 36, 37 and 39 are sequentially arranged in a direction A0 in which the material 31 is extruded. The fixed male die 36 and the fixed female die 37 mutually connected and integrated compose a fixed die 38 and the variable die 39 is moved along the superposed surface for the fixed die 38 by a drive unit 40 in a direction that crosses the direction of extrusion A0, in a set direction which is a perpendicular direction in the first embodiment. A reference number 41 denotes plural passages provided in the fixed male die 36 for leading the material 31 to an opening described later.

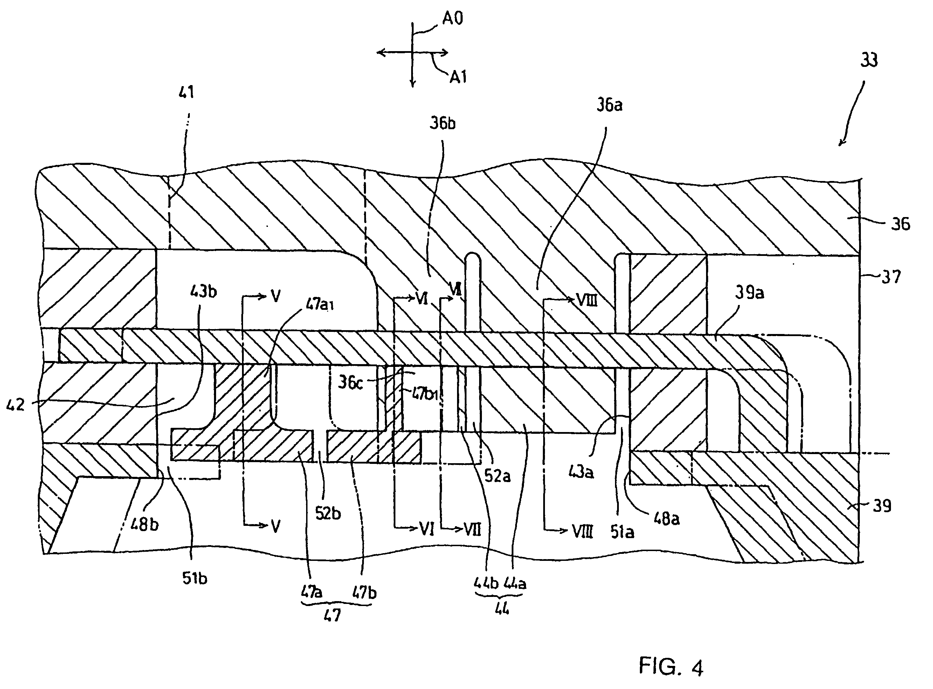

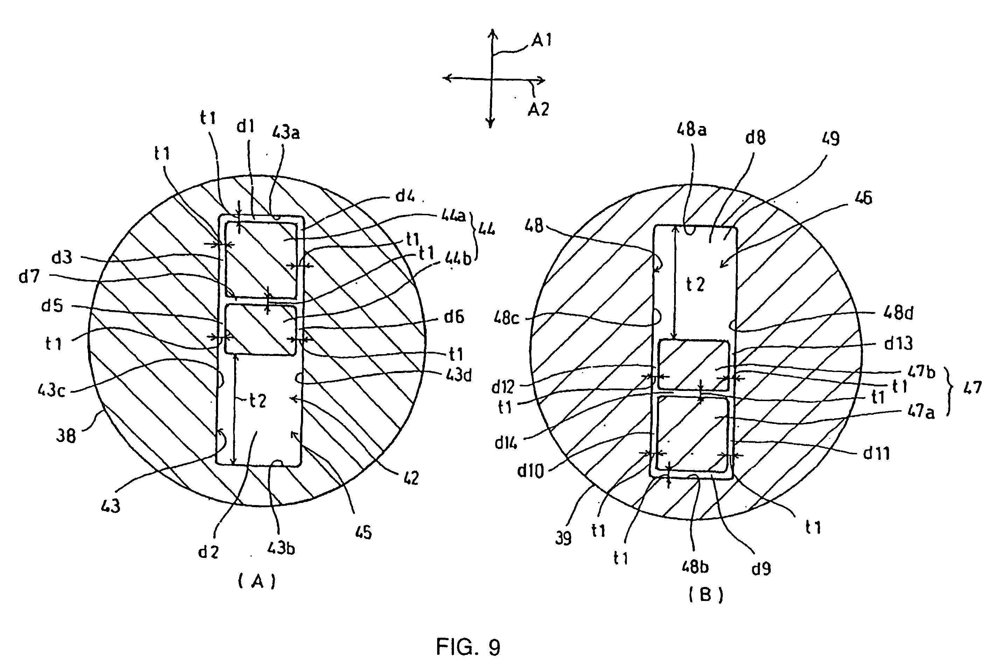

As shown in Figs. 4 to 9, a through hole 42 having a substantially rectangular section having a longer side parallel to a first direction A1 (in the first embodiment, as the set direction is a direction perpendicular to the direction of extrusion A0, the first direction A1 corresponds to the set direction) which is a direction when the set direction is projected on a plane perpendicular to the direction of extrusion A0 as shown in Fig. 9A is formed in the fixed female die 37 and the peripheral wall 43 of the through hole 42 is formed in parallel with the direction of extrusion A0. As shown in Fig. 4, a fixed core 44 provided via supporting parts 36a and 36b in the fixed male die 36 and composed of a first child core 44a and a second child core 44b respectively arranged in parallel to the first direction A1 is arranged in the through hole 42, forming a void between the fixed core and the peripheral wall 43. The peripheral wall 43 has a first peripheral wall part 43a and a second peripheral wall part 43b forming parallel shorter sides of a rectangle in the section and opposite in the first direction A1 and a third peripheral wall part 43c and a fourth peripheral wall part 43d forming parallel longer sides and opposite in a second direction A2 perpendicular to the first direction A1 on the section (that is, on the above-mentioned perpendicular plane).

The first child core 44a the section of which is substantially square and a pair of sides in the first direction A1 of which are parallel to the first and second peripheral wall parts 43a and 43b forms voids d1, d3 and d4 respectively having predetermined width t1 between the first child core and the first peripheral wall part 43a in the first direction A1, between the first child core and the third peripheral wall part 43c in the second direction A2 and between the first child core and the fourth peripheral wall part 43d, a second child core 44b the section of which is substantially rectangular, a pair of longer sides in the first direction A1 of which are parallel to the first and second peripheral wall parts 43a and 43b and the length of which is equal to a pair of sides of the first child core 44a forms voids d5 and d6 respectively having the predetermined width t1 between the second child core and the third peripheral wall part 43c in the second direction A2 and between the second child core and the fourth peripheral wall part 43d in the second direction A2 and forms a void d2 having predetermined width t2 wider than the predetermined width t1 between the second child core and the second peripheral wall part 43b in the first direction A1. Further, a void d7 between the cores having the predetermined width t1 in the first direction A1, continuously extended in the second direction A2 with the predetermined width t1 and continuing to the voids d5 and d6 is formed between the first and second child cores 44a and 44b. A fixed die hole 45 is formed by a void including these voids d1 to d7 and formed between the first and second child cores 44a and 44b arranged in the through hole 42 and the peripheral wall 43.

In the meantime, the variable die 39 has a through hole 46 having the same shape as the through hole 42 of the fixed female die 37, a first child core 47a and a second child core 47b forming a variable core 47 arranged in the through hole 46 are extended from a part of the variable die 39 as shown in Figs. 4 to 8, are fitted to both supporting parts 36a and 36b of the fixed male die 36 and into each supporting hole formed in the fixed female die 37 so that the first and second child cores can be slid and are integrated with a bar coupling member 39a linearly extended in the first direction A1 respectively via supporting parts 47a1 and 47b1. A cavity 36c formed in the supporting part 36b and the second child core 44b and open on the end face of the second child core 44b is provided to enable the supporting part 47b1 to move. As shown in Fig. 9B, the arrangement of the first and second child cores 47a and 47b in the through hole 46 is equivalent to that of the fixed die 38 turned by 180° in the first direction A1, and the shape and the width of each void d8 to d13 formed between the first or second child core 47a or 47b and the first, the second, the third or the fourth peripheral wall part 48a, 48b, 48c or 48d respectively forming the peripheral wall 48 and a void d14 formed between the first and second child cores 47a and 47b are also set as those of the fixed die 38. A variable die hole 49 is formed by a void including these voids d8 to d13 and formed between the first or second child core 47a or 47b arranged in the through hole 46 and the peripheral wall 43.

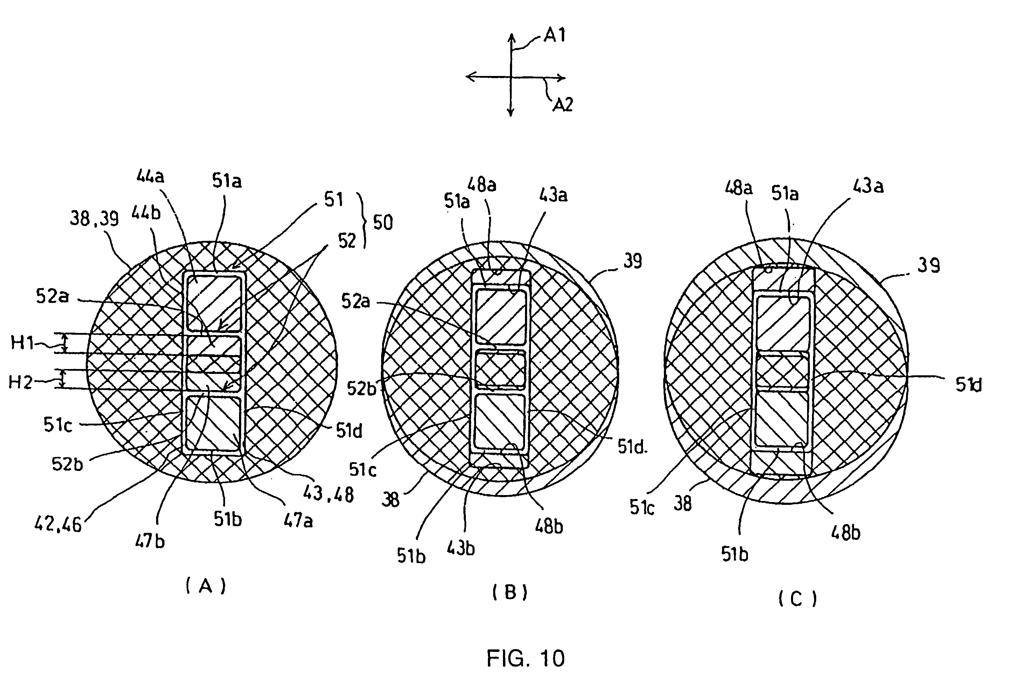

When as shown in Fig. 10A, the fixed die 38 and the variable die 39 are positioned in a state in which the respective peripheral walls 43 and 48 of both through holes 42 and 46 are matched and the fixed die 38 and the variable die 39 are superposed, the fixed core 44 and the variable core 47 are touched in the superposed parts as shown in Fig. 4, further, an opening 50 is formed by the superposition of the fixed die hole 45 and the variable die hole 49 in the direction of extrusion A0 and forms the outflow passage of the material 31 . The opening 50 has a substantially rectangular form having the predetermined width t1 and is provided with an opening for a tube wall 51 which is an opening for forming the tube wall 21 of the tube 20 and an opening for an intermediate wall 52 which continues to the opening for the tube wall 51 at both ends in the second direction A2, which has the predetermined width t1 in the first direction A1 and is continuously linearly extended in the second direction A2 and which is an opening for forming the connecting walls 22 and 23 as the intermediate wall formed in the inside space of the tube 20.

Concretely, the opening for the tube wall 51 is composed of an opening for a first tube wall 51a, an opening for a second tube wall 51b opposite to the opening for the first tube wall 51a in the first direction A1, an opening for a third tube wall 51c and an opening for a fourth tube wall 51d opposite to the opening for the third tube wall 51c in the second direction A2. In the meantime, the opening for the intermediate wall 52 is composed of an opening for a first intermediate wall 52a defined by the void between the cores d7 and continuing to the opening for the third tube wall 51c and the opening for the fourth tube wall 51d and an opening for a second intermediate wall 52b defined by the void between the cores d14, formed in parallel to the opening for the first intermediate wall 52a and having a gap in the first direction A1 and continuing to the openings for the third and fourth tube walls 51c and 51d. The length of the shorter sides which is the length in the first direction A1 on the sections of both second child cores 44b and 47b is respectively set so that a predetermined interval H1 in the first direction A1 is formed between the side on the side of the opening for the first intermediate wall 52a of the second child core 47b and the side and the opening for the first intermediate wall 52a and so that a predetermined interval H2 in the first direction A1 is formed between the side on the side of the opening for the second intermediate wall 52b of the second child core 44b and the side and the opening for the second intermediate wall 52b. When the sectional form of the formed tube 20 varies in the longitudinal direction, these predetermined intervals H1 and H2 respectively set to an equal value in the first embodiment are suitably set according to the width in the first direction A1 in a part in which the connecting walls 22 and 23 are not required in view of the magnitude of the rigidity required in a specific part of the tube 20.

Next, Referring to Figs. 2, 9 and 10, a process for forming the tube 20 by the extruder 30 using the above-mentioned die for tube extrusion molding 33 will be described. In Figs. 10, the fixed die 38 and the variable die 39 are shown by different hatching, a part shown by a void denotes the opening 50 and a part in which both hatching is overlapped denotes a part in which the fixed die 38 and the variable die 39 are superposed. In Figs. 9 and 10, the cavity 36c is omitted.

First, in a state shown in Fig. 10A, the velocity ratio of the traveling speed of the variable die 39 to an extrusion rate is set to predetermined velocity ratio and the drive unit 40 continuously moves the variable die 39 in one (upward in Fig. 10) of the set directions along the superposed surface, extruding the material 31 from the opening 50 by the ram. Hereby, the tube 20 having the tube wall 21 formed by the opening for the tube wall 51 and having the predetermined width t1 and the connecting walls 22 and 23 respectively formed by the openings for the first and second intermediate walls 52a and 52b and respectively having the predetermined width t1 is formed (see Fig. 2). As the amount of the movement of the variable die 39 increases, the width in the first direction A1 of a part in which both second child cores 44b and 47b are overlapped increases as shown in Fig. 10B for the shape of the opening 50, the width between the first peripheral wall 43a and the second peripheral wall 48b respectively opposite in the first direction A1 decreases, a maximum interval between the openings for the first and second tube walls 51a and 51b respectively opposite in the first direction A1 decreases and the sectional form in the direction of extrusion A0 of the tube 20 varies. Therefore, as shown in Fig. 2, the width of the tube wall 21 in the first direction A1 (in a vertical direction) of the tube 20 and an interval in the first direction A1 between both connecting walls 22 and 23 gradually become narrow, while the predetermined width t1 of the openings for the first and second intermediate walls 52a and 52b is kept while the variable die 39 is moved from Fig. 10A to Fig. 10B and the connecting walls 22 and 23 having fixed thickness corresponding to the predetermined width t1 are formed with them extended in the longitudinal direction (the direction of extrusion A0) of the tube 20.

Further, when the variable die 39 is further moved, extruding the material 31 at the above-mentioned predetermined velocity ratio, the opening for the first intermediate wall 52a is blocked by the second child core 47b and the opening for the second intermediate wall 52b is blocked by the second child core 44b respectively at the same time (see the position of the variable die 39 shown by an alternate long and two short dashes line in Fig. 4) as shown in Fig. 10C and the blocked state of the openings for both intermediate walls 52a and 52b is kept in the further movement of the variable die 39. From immediately after the second child core 47b begins to block the opening for the first intermediate wall 52a and the second child core 44b begins to block the opening for the second intermediate wall 52b to a state shown in Fig. 10C, the thickness of the connecting walls 22 and 23 varies from the predetermined width t1 to zero.

The width in the first direction A1 of the tube 20 when the openings for both intermediate walls 52a and 52b begin to be blocked, that is, the width between the first tube wall part 21a and the second tube wall part 21b which are respectively a pair of tube wall parts opposite in the first direction A1 of the tube wall 21 is suitably set according to the location of the tube 20 as the width when the increase of the rigidity by the connecting walls 22 and 23 respectively connecting the third tube wall part 21c and the fourth tube wall part 21d which are respectively a pair of tube wall parts opposite in the second direction A2 of the tube wall 21 is not required.

As a result, as shown in Fig. 2, the second tube wall part 21b becomes a tapered wall inclined so that the second tube wall part 21b gradually approaches the first tube wall part 21a parallel to the direction of extrusion A0 and the tube 20 becomes a tapered tube the width in the second direction A2 of which is equal in the longitudinal direction and the width in the first direction A1 of which gradually becomes narrower from an extrusion start end (the front end) 20a to an extrusion termination end (the rear end) 20b in the longitudinal direction, and in addition, as the front which is wider in the first direction A1 has the two connecting walls 22 and 23 and the rear has no connecting walls 22 and 23, the tube 20 is different in the number of formed connecting walls in the longitudinal direction.

Next, the action and the effect of the first embodiment configured as described above will be described.

In the extruder 30, as the connecting walls 22 and 23 connecting the third tube wall part 21c and the fourth tube wall part 21d opposite in the second direction A2 perpendicular to the first direction A1 in which the width of the tube wall 21 varies are formed by moving the variable die 39 in the set direction for the fixed die 38, extruding the material 31 from the opening 50, the tube 20 having high rigidity is easily formed.

At that time, as the tube 20 composed of a part having the two connecting walls 22 and 23 in the longitudinal direction and a part having no connecting walls 22 and 23 can be easily manufactured by extrusion molding by controlling the amount of the movement of the variable die 39 according to the magnitude of the rigidity required every part in the longitudinal direction of the tube 20 using a die for tube extrusion molding 33 in which the opening 50 having the opening for the first intermediate wall 52a opened or blocked by the second child core 47b according to the amount of the movement of the variable die 39 and the opening for the second intermediate wall 52b opened or blocked by the second child core 44b according to the amount of the movement of the variable die 39 is formed, the productivity of the tube 20 which is composed of a part having the different number of the connecting walls 22 and 23 according to the magnitude of the required rigidity and a part having no connecting walls 22 and 23 and the rigidity of which is different in the longitudinal direction is enhanced and the cost can be reduced. Further, as the connecting walls 22 and 23 are formed in only a part requiring high rigidity of the tube 20, the increase of the weight can be inhibited, compared with a tube in which connecting walls are formed through the longitudinal direction of the tube.

As the head pipe 1 of the motorcycle V is formed by the tube 20, the front including the connection 5a to the head pipe 1 has high rigidity because the front has the two connecting walls 22 and 23 and the rear of the main pipe 5 has relatively low rigidity because the rear has no connecting walls 22 and 23, and as the connection 5a has high rigidity and spring is caused because the rear has relatively low rigidity, the ride quality evaluation of the motorcycle V is enhanced. In addition, as the tube 20 forming the main pipe 5 is manufactured by extrusion molding, the productivity is enhanced, the cost can be reduced and as a result, the cost of the motorcycle V can be reduced.

As the openings for both intermediate walls 52a and 52b are made in an open state in which the predetermined width t1 is maintained and in a state in which a blocked state is maintained respectively according to the amount of the movement of the variable die 39 by both second child cores 44b and 47b, the connecting walls 22 and 23 can have fixed width corresponding to the predetermined width t1 in the longitudinal direction in the inside space of the tube 20 in case the width of the tube 20 varies in the first direction A1, particularly in case the width of the tube 20 is increased in the first direction A1, and the increase of the weight of the tube 20 by the formation of the connecting walls 22 and 23 can be inhibited.

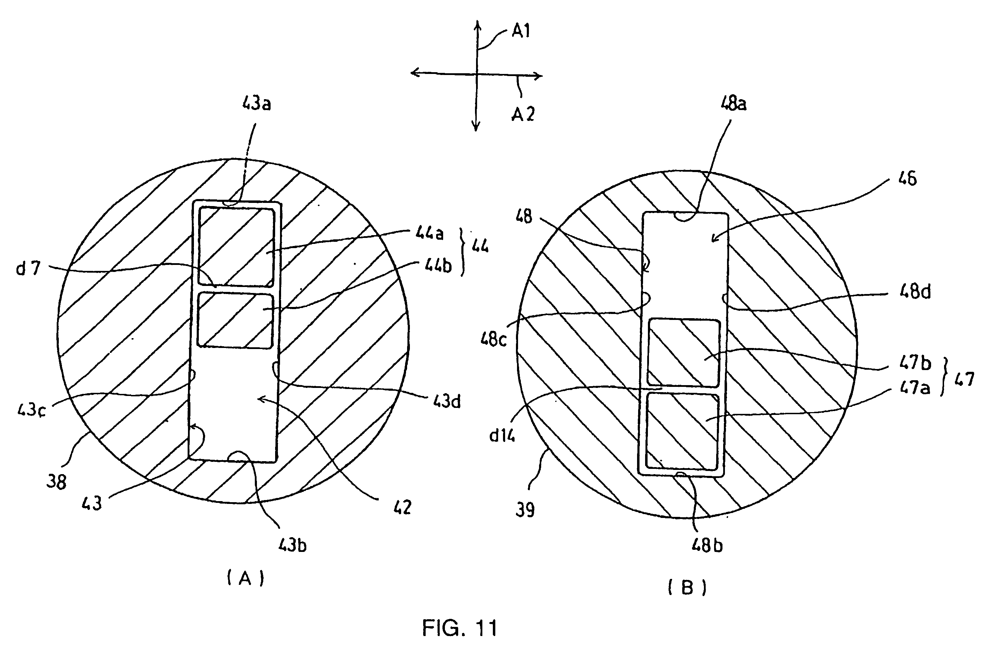

Next, referring to Figs. 11 to 13, a second embodiment of the invention will be described. The second embodiment is different from the first embodiment in only the width in a first direction A1 of a second child core 47b of a variable die 39 and the other part basically has the same configuration. Therefore, the description of the same part is omitted or simplified and a different point will be mainly described. The same reference number is allocated to same member as the member in the first embodiment or the corresponding member.

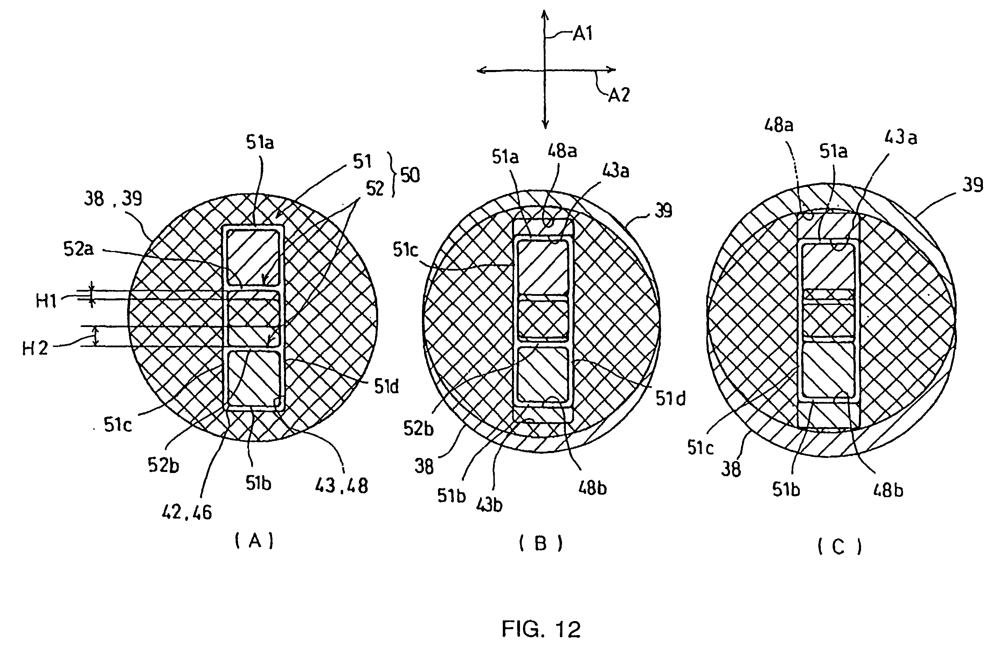

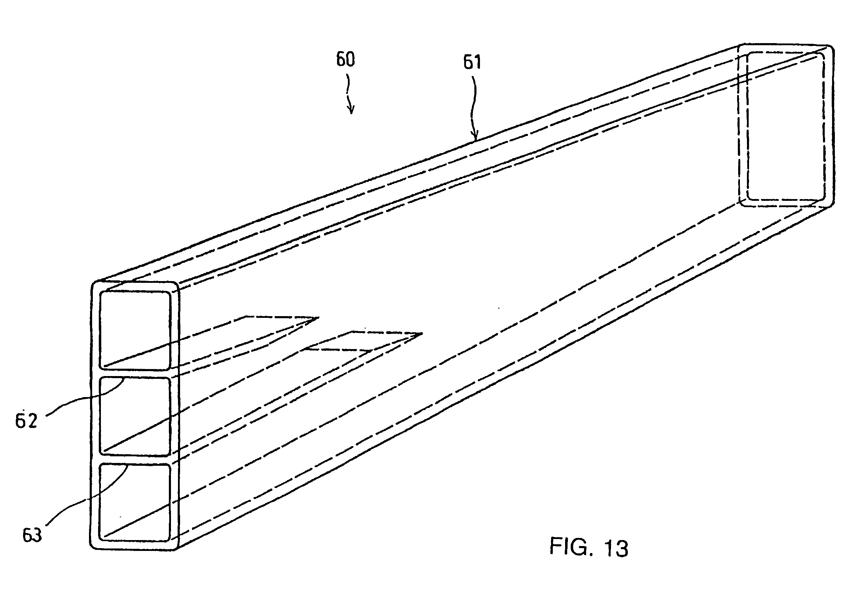

As shown in Figs. 11, in the second embodiment, the width in the first direction A1 of the second child core 47b is set so that it is larger than the width in the first direction A1 of a second child core 44b of a fixed die 38. Therefore, as shown in Fig. 12A, in a state in which the fixed die 38 and the variable 39 are positioned so that the respective peripheral walls 43 and 48 of both through holes 42 and 46 are matched, a predetermined interval H1 in the first direction A1 between the second child core 47b and an opening for a first intermediate wall 52a is shorter, compared with that in the first embodiment. When a drive unit 40 continuously moves the variable die 39 in one of the set directions (upward in Figs. 12) along the superposed surface, extruding material 31 from an opening 50 in this state, a tube 60 having a tube wall 61 formed by an opening for a tube wall 51 and having the thickness of predetermined width t1 and two connecting walls 62 and 63 respectively formed by openings for both intermediate walls 52a and 52b and having the thickness of predetermined width t1 is formed (see Fig. 13).

When the amount of the movement of the variable die 39 increases to be in a state shown in Fig. 12B, the width of the tube wall 61 in the first direction A1 of the tube 60 and an interval in the first direction A1 between both connecting walls 62 and 63 gradually become narrow as shown in Fig. 13, simultaneously, the width in the first direction A1 of a part in which both second child cores 44b and 47b are superposed increases, the opening for the first intermediate wall 52a is blocked by the second child core 47b, the block state of the opening for the first intermediate wall 52a is maintained in the amount of the further movement of the variable die 39, while the open state by the predetermined width t1 of the opening for the second intermediate wall 52b is maintained. Therefore, in the amount of the movement of the variable die 39 from Fig. 12A to a state before Fig. 12B, the open state by the predetermined width t1 of the openings for both intermediate walls 52a and 52b is maintained, each part extended in the longitudinal direction of the tube 60 of the connecting walls 62 and 63 having fixed thickness corresponding to the predetermined width t1 is formed and from immediately after the second child core 47b begins to block the opening for the second intermediate wall 52b to Fig. 12B, a part in which the thickness of the connecting wall 62 varies from the predetermined width t1 to zero is formed.

Further, when the variable die 39 is further moved, extruding the material 31, the opening for the second intermediate wall 52b is blocked by the second child core 44b as shown in Fig. 12C and the blocked state of the opening for the second intermediate wall 52b is maintained in the amount of the further movement of the variable die 39.

As a result, as shown in Fig. 13, as the tube wall 61 of the tube 60 becomes the similar tapered tube to that in the first embodiment, in addition, the front the width of which is large in the first direction A1 has the two connecting walls 62 and 63, a part at the back of the front has one connecting wall 63 and the rear has no connecting walls 62 and 63, the tube is different in the number of connecting walls formed in the longitudinal direction. A point at which each blocked state of the openings for both intermediate walls 52a and 52b is started is suitably set according to the location of the tube 60 in view of the magnitude of rigidity required in a specific part of the tube 60 as in the first embodiment.

According to the second embodiment, in addition to the similar action and effect to those in the first embodiment, as the tube 60 having the connecting walls 62 and 63 extended in different length in the longitudinal direction is composed of a part having the two connecting walls 62 and 63, a part having one connecting wall 63 and a part having no connecting wall, the tube 60 the magnitude of the rigidity of which gradually decreases, compared with that in the first embodiment is acquired.

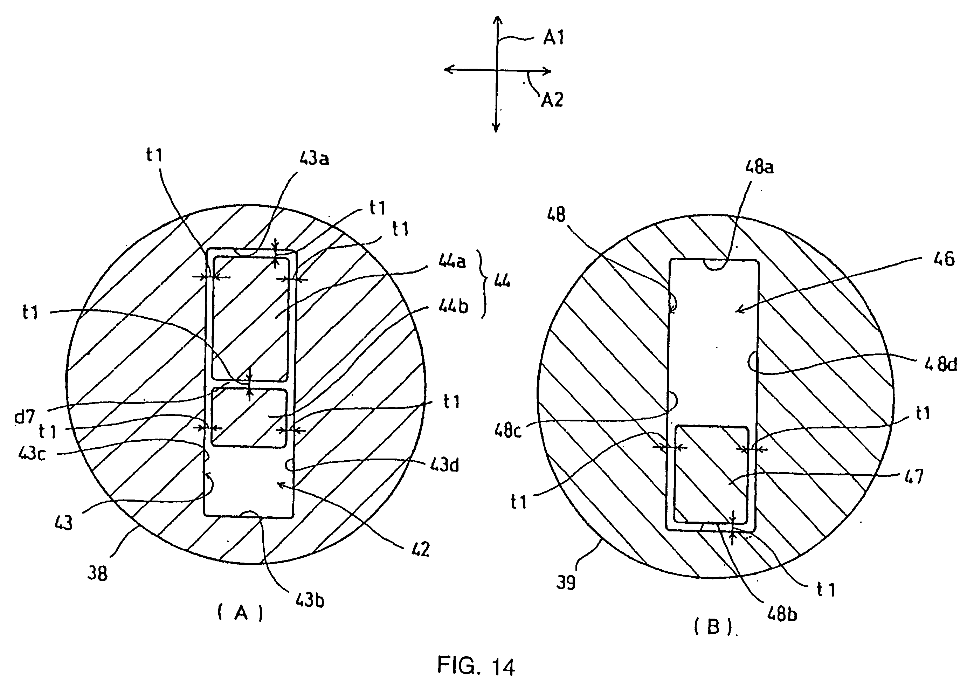

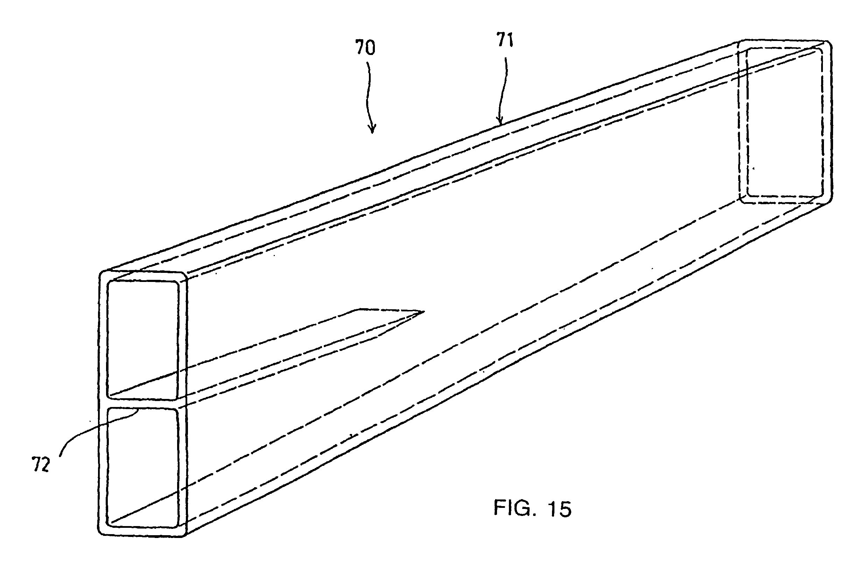

Next, referring to Figs. 14 and 15, a third embodiment of the invention will be described. The third embodiment is different from the first embodiment in only a fixed core 44 and a variable core 47 and the other part basically has the same configuration. Therefore, the description of the same part is omitted or simplified and a different point will be mainly described. The same reference number is allocated to the same member as that in the first embodiment or the corresponding member.

As shown in Figs. 14, in the third embodiment, the width in a first direction A1 of a first child core 44a of the fixed core 44 is increased, compared with that in the first embodiment so that a void between cores d7 is positioned in the substantially center in the first direction A1 of a through hole 42. In the meantime, the variable core 47 is formed by a single core.

In a state in which a fixed die 38 and a variable die 39 are positioned so that the respective peripheral walls 43 and 48 of both through holes 42 and 46 are matched, a predetermined interval in the first direction A1 is formed between the variable core 47 and an opening for an intermediate wall defined by the void between the cores d7 and the opening for the intermediate wall is open by predetermined width tl. When the variable die 39 is continuously moved in one of set directions along the superposed surface, extruding the material 31 from the opening in this state as in the first embodiment, a tube 70 having the tube wall 71 having the thickness of the predetermined width t1 formed by an opening for the tube wall and a connecting wall 72 having the thickness of the predetermined width t1 formed by the opening for the intermediate wall is formed as shown in Fig. 15.

When the amount of the movement of the variable die 39 increases, the opening for the intermediate wall is blocked by the variable core 47 and the blocked state of the opening for the intermediate wall is maintained in the amount of the further movement of the variable die 39. As a result, as shown in Fig. 15, the wall 71 of the tube 70 becomes a tapered tube as in the first embodiment and in addition, as the front the width in the first direction A1 of which is large has one connecting wall 72 and the rear has no connecting wall 72, the tube becomes a tube different in the number of connecting walls formed in the longitudinal direction.

According to the third embodiment, the similar action and effect to those in the first embodiment are produced except that the rigidity of the tube 70 is slightly lower, compared with the rigidity in the first embodiment.

The changed configuration in an embodiment in which the configuration of a part in the above-mentioned embodiments is changed will be described below.

A tube having three or more connecting walls can be also formed by arranging three or more child cores in at least one die hole out of a fixed die hole 45 and a variable die hole 49. In case a die for tube extrusion molding has plural voids between cores, one of them can be also made never blocked by a core.

In the above-mentioned each embodiment, the fixed die 38 is fixed to the container 32, however, both dies are moved in reverse directions by a drive unit by forming the fixed die so that it can be freely moved from the container 32 and forming both dies as a variable die and each wall opposite in the first direction A1 of a tube may also become a tapered wall inclined in the longitudinal direction.

In the above-mentioned each embodiment, the width in the first direction A1 of the tube continuously monotonously decreases in the longitudinally direction from the extrusion start end, however, the above-mentioned width may also increase or decrease in the longitudinal direction. A tube having parts different in the inclination of a tapered part can be formed by changing the above-mentioned velocity ratio while the material 31 is extruded and in addition, the length in the longitudinal direction of the connecting wall can be also adjusted. Further, a part having a fixed section can be also formed by setting the velocity ratio to zero.

The above-mentioned set direction is the direction perpendicular to the direction of extrusion A0, however, it may be also a direction on a plane not perpendicular to the direction of extrusion A0. Each width in the first direction A1 of the fixed die hole 45 and the variable die hole 49 may be also different.

In the above-mentioned each embodiment, the intermediate wall is the connecting wall connecting a pair of tube walls opposite in the second direction A2, however, an intermediate wall is separated in the second direction A2 in an intermediate part of a pair of tube walls without connecting the pair of tube walls by connecting plural child cores of the fixed core 44 and plural child cores of the variable core 47 in an intermediate position in the second direction A2 and a void extended in the longitudinal direction may be also formed in the part.

The invention provides an extrusion molding process and a die for tube extrusion molding wherein a tube having an intermediate wall extended in a direction which crosses a direction in which the width of a tube varies can be formed easily and at a low cost.

To achieve this, a die for tube extrusion molding is provided with a fixed die 37 and a movable variable die 39 and a tube is formed by material extruded from an opening 50 formed by the superposition in the direction of extrusion of a fixed die hole and a variable die hole. The opening 50 has an opening for a tube wall 51 forming the wall of the tube and openings for two intermediate walls 52 forming connecting walls in the inside space of the tube, the tube is composed of a part having the connecting wall and a part having no connecting wall by opening or blocking the opening for the intermediate wall 52 by the cores 44b and 47b according to the amount of the movement of the variable die 39 and the tube different in the rigidity in the longitudinal direction is formed.

## Claims

1. A process for extruding a tube (20) having different sections where the tube (20) is formed by using a die (33) for tube extrusion molding provided with a first die (38) and a second die (39) which are superposed in a direction of extrusion (A0) and which can be relatively moved in a set direction (A1) along the superposed surface and extruding the material via an opening (50) formed by the superposition in the direction of extrusion of a first die hole (45) formed in the first die (38) and a second die hole (46) formed in the second die (39) and the sectional form of the tube (20) is varied in the direction of extrusion (A0) by relatively moving the first die (38) and the second die (39) in the set direction (A1), wherein:
the opening (50) has an opening (51) for a tube wall (21) and an opening (52) for at least one intermediate wall (22, 23) which continues to the opening (51) for the tube wall (21) inside the opening for the tube wall (21),
**characterized in that** the opening (52) for at least one intermediate wall (22,23) has predetermined width (t₁) in a first direction (A1) which is a direction when the set direction (A1) is projected on a plane perpendicular to the direction of extrusion (A0) and which is extended in a second direction (A2) crossing the first direction (A1) on the perpendicular plane; and
**in that** the first die (38) and the second die (39) are relatively moved in the set direction (A1), extruding the material from the opening (50), the wall (51) of the tube (20) the width in the first direction (A1) of which varies in the longitudinal direction is formed via the opening (51) for the tube wall (21) and simultaneously, the intermediate wall (22, 23) having the fixed thickness of the predetermined width (t,) in the first direction (A1), extended in the longitudinal direction and continuing to the tube wall (21) is formed in the inside space of the tube via the opening (52) for the intermediate wall (22, 23).

2. A process for extruding a tube having different sections according to Claim 1, wherein:
the intermediate wall (22, 23) is a connecting wall which connects two tube wall parts (21 c, 21d) opposite in the second direction (A2) of the tube wall (21) and which partitions the inside space into plural independent partial spaces on the section of the tube (20); and
the number of the connecting walls (22, 23) in the longitudinal direction of the tube (20) is changed by opening or blocking at least one of the openings (52) for the intermediate walls (22, 23) according to the amount of the relative movement in the set direction (A1) of the first die (38) and the second die (39).

3. A die for tube extrusion molding provided with a first die (38) and a second die (39) which are superposed in a direction of extrusion (A0) and which can be relatively moved in a set direction (A1) along the superposed surface where the first die (38) has a first die hole (45) and the second die (39) has a second die hole (49) and an opening (50) formed by the superposition in the direction of extrusion (A0) of the first die hole (45) and the second die hole (49) forms the outflow passage of the material of the formed tube (20) **characterized in that** the first die hole (45) is formed by a void between the first peripheral wall (43) of a first hole (42) formed in the first die and a first core (44) arranged in the first hole (42) and integrated with the first die (38), the second die hole (46) is formed by a void between the second peripheral wall (48) of a second hole (46) formed in the second die (39) and a second core (47) arranged in the second hole (46) and integrated with the second die (39)
the first core (44) is composed of plural child cores (44a, b) arranged in parallel, having predetermined width in a first direction (A1) which is a direction when the set direction (A1) is projected on a plane perpendicular to the direction of extrusion and forming a void between the plural child cores (44a, b) extended in a second direction (A2) crossing the first direction (A1) on the perpendicular plane;
the opening (50) has an opening (51) for a tube wall (21) formed by a void between the first peripheral wall (43) or the second peripheral wall (48) and the first core (44) or the second core (47) and an opening (52a) for a first intermediate wall (22) defined by the void (t₁) between the first cores (44a, b) and continuing to the opening (51) for the tube wall (21); and
the first die (38) and the second die (39) are superposed so that the maximum interval in the first direction (A1) of the opening (51) for the tube wall (21) can be varied according to the amount of the relative movement in the set direction (A1) of the first die (38) and the second die (39) and the second core (47) keeps at least one of the openings (52a) for the first intermediate wall (22) in an open state by the predetermined width (t1) and in a blocked state.

4. A die for tube extrusion molding according to Claim 3, wherein:
the void between the first cores (44a, b) is continuously extended in a second direction (A2);
the second core (47) is composed of plural child cores (47a, b) arranged in parallel respectively having predetermined width in the first direction (A1) and forming a void between at least one second cores (47a, b) continuously extended in the second direction (A2);
the opening (50) has an opening (52b) for a second intermediate wall (23) defined by a void between the second cores (47) and continuing to the opening (51) for the tube wall (21); and
the first die (38) and the second die (39) are superposed so that the first core (44) keeps at least one of the openings (52b) for the second intermediate wall (23) in an open state by the predetermined width (t₁) and in a blocked state according to the amount of the relative movement in the set direction (A1) of the first die (38) and the second die (39).

## Patentansprüche

1. Verfahren zum Extrudieren einer Röhre (20), welche unterschiedliche Abschnitte aufweist, wobei die Röhre (20) unter Verwendung einer Form (33) zum Röhrenextrusionsformen gebildet wird, welche mit einer ersten Form (38) und einer zweiten Form (39) versehen ist, welche in einer Extrusionsrichtung (A0) überlagert sind, und welche relativ zueinander entlang der überlagerten Fläche in einer festgesetzten Richtung (A1) bewegt werden können, und wobei das Material durch eine Öffnung (50) extrudiert wird, die durch die Überlagerung in Extrusionsrichtung eines in der ersten Form (38) gebildeten ersten Formlochs (45) und eines in der zweiten Form (39) gebildeten zweiten Formlochs (46) gebildet wird, und wobei die Querschnittsform der Röhre (20) in der Extrusionsrichtung (A0) geändert wird, indem die erste Form (38) und die zweite Form (39) relativ zueinander in der festgesetzten Richtung (A1) bewegt werden, wobei:
die Öffnung (50) eine Öffnung (51) für eine Röhrenwand (21) aufweist, und eine Öffnung (52) für wenigstens eine Zwischenwand (22, 23), welche sich bis zur Öffnung (51) für die Röhrenwand (21) innerhalb der Öffnung für die Röhrenwand (21) fortsetzt,
**dadurch gekennzeichnet, dass** die Öffnung (52) für wenigstens eine Zwischenwand (22, 23) eine vorbestimmte Breite (t1) aufweist in einer ersten Richtung (A1), welche eine Richtung ist, die dadurch gegeben ist, dass die festgesetzte Richtung (A1) auf eine zur Extrusionsrichtung (A0) senkrechte Ebene projiziert wird, und sich in einer zweiten Richtung (A2) erstreckt, welche die erste Richtung (A1) in der senkrechten Ebene kreuzt; und dass die erste Form (38) und die zweite Form (39) relativ zueinander in der festgesetzten Richtung (A1) bewegt werden, wobei das Material aus der Öffnung (50) extrudiert wird, die Wand (51) der Röhre (20), deren Breite in der ersten Richtung (A1) sich in der Längsrichtung ändert, durch die Öffnung (51) für die Röhrenwand (21) gebildet wird, und gleichzeitig die Zwischenwand (22, 23), welche in der ersten Richtung (A1) die fixierte Dicke der vorbestimmten Breite (t1) aufweist, und sich in der Längsrichtung erstreckt und bis zur Röhrenwand (21) fortsetzt, im Innenraum der Röhre durch die Öffnung (52) für die Zwischenwand (22, 23) gebildet wird.

2. Verfahren zum Extrudieren einer Röhre nach Anspruch 1, wobei:
die Zwischenwand (22, 23) eine Verbindungswand ist, welche zwei Röhrenwandteile (21c, 21d) verbindet, die einander in der zweiten Richtung (A2) der Röhrenwand (21) gegenüberliegen, und welche den Innenraum in mehrere unabhängige Teilräume im Querschnitt der Röhre (20) aufteilt; und
die Anzahl der Verbindungswände (22, 23) in der Längsrichtung der Röhre (20) geändert wird, indem wenigstens eine der Öffnungen (52) für die Zwischenwände (22, 23), entsprechend dem Betrag der Relativbewegung der ersten Form (38) und der zweiten Form (39) in der festgesetzten Richtung (A1), geöffnet oder blockiert wird.

3. Form zum Röhrenextrusionsformen, welche mit einer ersten Form (38) und einer zweiten Form (39) versehen ist, die in einer Extrusionsrichtung (A0) überlagert sind, und die relativ zueinander in einer festgesetzten Richtung (A1) entlang der überlagerten Fläche bewegbar sind, wobei die erste Form (38) ein erstes Formloch (45) aufweist und die zweite Form (39) ein zweites Formloch (49) aufweist, und eine Öffnung (50), welche durch die Überlagerung des ersten Formlochs (45) und des zweiten Formlochs (49) in der Extrusionsrichtung (A0) gebildet ist, den Ausflussdurchgang des Materials der gebildeten Röhre (20) bildet,
**dadurch gekennzeichnet, dass** das erste Formloch (45) durch einen Hohlraum zwischen der ersten Umfangswand (43) eines in der ersten Form gebildeten ersten Lochs (42) und einem im ersten Loch (42) angeordneten und mit der ersten Form (38) integrierten ersten Kern (44) gebildet ist,
dass das zweite Formloch (46) durch einen Hohlraum zwischen der zweiten Umfangswand (48) eines in der zweiten Form (39) gebildeten zweiten Lochs (46) und einem im zweiten Loch (46) angeordneten und mit der zweiten Form (39) integrierten zweiten Kern (47) gebildet ist; dass der erste Kein (44) aus mehreren Nachfolgerkemen (44a, b) aufgebaut ist, welche parallel angeordnet sind, eine vorbestimmte Breite in einer ersten Richtung (A1) aufweisen, welche eine Richtung ist, die dadurch gegeben ist, dass die festgesetzte Richtung (A1) auf eine zur Extrusionsrichtung senkrechte Ebene projiziert ist, und bei welchen ein Hohlraum zwischen den mehreren Nachfolgerkernen (44a, b) gebildet ist, der sich in einer zweiten Richtung (A2) erstreckt, die die erste Richtung (A1) in der senkrechten Ebene kreuzt;
dass die Öffnung (50) eine Öffnung (51) für eine Röhrenwand (21) aufweist, welche durch einen Hohlraum zwischen der ersten Umfangswand (43) oder der zweiten Umfangswand (48) und dem ersten Kern (44) oder dem zweiten Kern (47) gebildet ist, und eine Öffnung (52a) für eine erste Zwischenwand (22), welche durch den Hohlraum (t₁) zwischen den ersten Kernen (44a, b) definiert ist, und sich zur Öffnung (51) für die Röhrenwand (21) fortsetzt; und
dass die erste Form (38) und die zweite Form (39) so überlagert sind, dass der maximale Abstand in der ersten Richtung (A1) der Öffnung (51) für die Röhrenwand (21) entsprechend dem Betrag der Relativbewegung der ersten Form (38) und der zweiten Form (39) in der festgesetzten Richtung (A1) geändert werden kann, und wobei der zweite Kern (47) wenigstens eine der Öffnungen (52a) für die erste Zwischenwand (22) in einem offenen Zustand mit der vorbestimmten Breite (t1) und in einem blockierten Zustand hält.

4. Form zum Röhrenextrusionsformen nach Anspruch 3, wobei:
sich der Hohlraum zwischen den ersten Kernen (44a, b) kontinuierlich in einer zweiten Richtung (A2) erstreckt;
der zweite Kern (47) aus mehreren Nachfolgerkemen (47a, b) aufgebaut ist, welche parallel angeordnet sind, jeweils eine vorbestimmte Breite in der ersten Richtung (A1) aufweisen, und einen Hohlraum zwischen wenigstens einem der zweiten Kerne (47a, b) bilden, der sich kontinuierlich in der zweiten Richtung (A2) erstreckt;
die Öffnung (50) eine Öffnung (52b) für eine zweite Zwischenwand (23) aufweist, welche durch einen Hohlraum zwischen den zweiten Kernen (47) definiert ist und sich zur Öffnung (51) für die Röhrenwand (21 ) fortsetzt; und
die erste Form (38) und die zweite Form (39) überlagert sind, so dass der erste Kern (44) wenigstens eine der Öffnungen (52b) für die zweite Zwischenwand (23), entsprechend dem Betrag der Relativbewegung der ersten Form (38) und der zweiten Form (39) in der festgesetzten Richtung (A1), in einem offenen Zustand mit der vorbestimmten Breite (t₁) und in einem blockierten Zustand hält.

## Revendications

1. Procédé pour extruder un tube (20) ayant différents tronçons dans lequel le tube (20) est formé en utilisant une matrice (33) de moulage par extrusion de tube comportant une première matrice (38) et une seconde matrice (39) qui sont superposées dans une direction d'extrusion (A0) et qui peuvent être déplacées de manière relative dans une direction déterminée (A1) le long de la surface superposée et extrudant la matière par une ouverture (50) formée par la superposition dans la direction d'extrusion d'un premier trou de matrice (45) formé dans la première matrice (38) et d'un second trou de matrice (46) formé dans la seconde matrice (39) et la forme en coupe du tube (20) est changée dans la direction d'extrusion (A0) en déplaçant de manière relative la première matrice (38) et la seconde matrice (39), dans la direction déterminée (A1), dans lequel :
l'ouverture (50) a une ouverture (51) pour une paroi de tube (21) et une ouverture (52) pour au moins une paroi intermédiaire (22, 23) qui se poursuit jusqu'à l'ouverture (51) pour la paroi de tube (21) à l'intérieur de l'ouverture pour la paroi de tube (21),
**caractérisé en ce que** l'ouverture (52) pour au moins une paroi intermédiaire (22, 23) a une largeur prédéterminée (t₁) dans une première direction (A1) qui est une direction obtenue lorsque la direction déterminée (A1) est projetée sur un plan perpendiculaire à la direction d'extrusion (A0), et s'étend dans une seconde direction (A2) croisant la première direction (A1) sur le plan perpendiculaire, et
**en ce que** la première matrice (38) et la seconde matrice (39) sont déplacées de manière relative dans la direction déterminée (A1), extrudant la matière à partir de l'ouverture (50), la paroi (51) du tube (20) dont la largeur dans la première direction (A1) varie dans la direction longitudinale est formée par l'ouverture (51) pour la paroi de tube (21) et simultanément, la paroi intermédiaire (22, 23) ayant l'épaisseur fixe de la largeur prédéterminée (t₁) dans la première direction (A1), prolongée dans la direction longitudinale et se poursuivant jusqu'à la paroi de tube (21) est formée dans l'espace intérieur du tube par l'ouverture (52) pour la paroi intermédiaire (22, 23).

2. Procédé pour extruder un tube ayant différents tronçons selon la revendication 1, dans lequel :
la paroi intermédiaire (22, 23) est une paroi de liaison qui relie deux parties de paroi de tube (21c, 21d) opposées dans la seconde direction (A2) de la paroi de tube (21) et qui sépare l'espace intérieur en plusieurs espaces partiels indépendants sur le tronçon du tube (20), et
le nombre de parois de liaison (22, 23) dans la direction longitudinale du tube (20) est changé en ouvrant ou en bloquant au moins une des ouvertures (52) pour les parois intermédiaires (22, 23) en fonction de la quantité du mouvement relatif dans la direction déterminée (A1) de la première matrice (38) et de la seconde matrice (39).

3. Matrice d'extrusion de tube comportant une première matrice (38) et une seconde matrice (39) qui sont superposées dans une direction d'extrusion (A0) et qui peuvent être déplacées de manière relative dans une direction déterminée (A1) le long de la surface superposée où la première matrice (38) a un premier trou de matrice (45) et la seconde matrice (39) a un second trou de matrice (49), et où une ouverture (50) formée par la superposition dans la direction d'extrusion (A0) du premier trou de matrice (45) et du second trou de matrice (49) forme le passage d'écoulement de sortie du matériau du tube formé (20),
**caractérisée en ce que** le premier trou de matrice (45) est formé par un vide entre la première paroi périphérique (43) d'un premier trou (42) formé dans la première matrice et un premier noyau (44) agencé dans le premier trou (42) et intégré dans la première matrice (38), le second trou de matrice (49) est formé par un vide entre la seconde paroi périphérique (48) d'un second trou (46) formé dans la seconde matrice (39) et un second noyau (47) agencé dans le second trou (46) et intégré dans la seconde matrice (39),
le premier noyau (44) est constitué de plusieurs noyaux enfants (44a, b) agencés parallèlement, ayant une largeur prédéterminée dans une première direction (A1) qui est une direction obtenue lorsque la direction déterminée (A1) est projetée sur un plan perpendiculaire à la direction d'extrusion et formant un vide entre la pluralité de noyaux enfants (44a, b) prolongés dans une seconde direction (A2) croisant la première direction (A1) sur le plan perpendiculaire,
l'ouverture (50) a une ouverture (51) pour une paroi de tube (21) formée par un vide entre la première paroi périphérique (43) ou la seconde paroi périphérique (48) et le premier noyau (44) ou le second noyau (47) et une ouverture (52a) pour une première paroi intermédiaire (22) définie par le vide (t₁) entre les premiers noyaux (44a, b) et se poursuivant jusqu'à l'ouverture (51) pour la paroi de tube (21), et
la première matrice (38) et la seconde matrice (39) sont superposées de sorte que l'intervalle maximal dans la première direction (A1) de l'ouverture (51) pour la paroi de tube (21) peut être changé en fonction de la quantité du mouvement relatif dans la direction déterminée (A1) de la première matrice (38) et de la seconde matrice (39), et le second noyau (47) maintient au moins l'une des ouvertures (52a) pour la première paroi intermédiaire (22) dans un état ouvert à la largeur prédéterminée (t₁) et dans un état bloqué.

4. Matrice d'extrusion de tube selon la revendication 3, dans laquelle :
le vide entre les premiers noyaux (44a, b) est prolongé de manière continue dans une seconde direction (A2) ,
le second noyau (47) est constitué de plusieurs noyaux enfants (47a, b) agencés parallèlement ayant respectivement une largeur prédéterminée dans la première direction (A1) et formant un vide entre au moins un des seconds noyaux (47a, b) prolongé de manière continue dans la seconde direction (A2),
l'ouverture (50) a une ouverture (52b) pour une seconde paroi intermédiaire (23) définie par un vide entre les seconds noyaux (47) et se poursuivant jusqu'à l'ouverture (51) pour la paroi de tube (21), et
la première matrice (38) et la seconde matrice (39) sont superposées de sorte que le premier noyau (44) maintient au moins une des ouvertures (52b) pour la seconde paroi intermédiaire (23) dans un état ouvert à la largeur prédéterminée (t₁) et dans un état bloqué en fonction de la quantité du mouvement relatif dans la direction déterminée (A1) de la première matrice (38) et de la seconde matrice (39).
